Europäisches Patentamt

European Patent Office

Office européen des brevets

(19)

(11) Veröffentlichungsnummer: **0 125 395 B1**

(12) **EUROPÄISCHE PATENTSCHRIFT**

(45) Veröffentlichungstag der Patentschrift: **08.05.91**

(51) Int. Cl.⁵: **C01C 3/02**

(21) Anmeldenummer: **84101595.1**

(22) Anmeldetag: **16.02.84**

(54) Verfahren und Vorrichtung zur Herstellung von Cyanwasserstoff.

(30) Priorität: **16.03.83 DE 3309394**

(43) Veröffentlichungstag der Anmeldung:
**21.11.84 Patentblatt 84/47**

(45) Bekanntmachung des Hinweises auf die
Patenterteilung:
**08.05.91 Patentblatt 91/19**

(84) Benannte Vertragsstaaten:
**AT BE CH DE FR GB IT LI NL SE**

(56) Entgegenhaltungen:
**DE-C- 1 041 476**
**DE-C- 1 078 554**
**DE-C- 2 913 925**

(73) Patentinhaber: **Degussa Aktiengesellschaft**
**Weissfrauenstrasse 9**
**W-6000 Frankfurt am Main 1(DE)**

(72) Erfinder: **Manner, Reinhard, Dr. Dipl.-Ing.**
**Bonhoefferstrasse 17**
**W-6457 Maintal(DE)**
Erfinder: **Schaefer, Hans, Dr. Dipl.-Chem.**
**Liesingstrasse 10**
**W-6450 Hanau 9(DE)**
Erfinder: **Voigt, Carl, Dr. Dipl.-Chem.**
**Im Heegholz 5**
**W-6458 Rodenbach 2(DE)**
Erfinder: **Pfeifer, Wolf Dieter, Dr. Dipl.-Chem.**
**Stettiner Strasse 4**
**W-5040 Brühl(DE)**

## Beschreibung

Es ist bekannt, Cyanwasserstoff nach dem BMA-Verfahren aus einem luftfreien Gasgemisch, das nur aus Ammoniak und Kohlenwasserstoff besteht, herzustellen. Als Kohlenwasserstoff wurde lange Zeit bevorzugt Methan eingesetzt; in jüngster Zeit aber konnten auch Flüssiggase erfolgreich verwendet werden, s. ULLMANN, Enzyklopädie der technischen Chemie, 4. Auflage, Band 9, Seite 359, und DE-PS 29 13 925.

In beiden Fällen wird das Gasgemisch durch hängende Reaktionsrohre aus gesintertem Aluminiumoxid geleitet, die innen mit Platin belegt sind. Die Rohre hängen in Bündeln in Ofenkammern, und das cyanwasserstoffhaltige Produktgasgemisch wird nach Passieren der Rohre schnell in einer wassergekühlten Kammer am Ende des Ofenkopfes auf unter 300 °C abgekühlt, s. ULLMANN, loc.cit.

Die Handhabung der Reaktionsrohre ist nicht einfach auf Grund des raschen Temperaturwechsels, dem die Rohre ausgesetzt sind.

Um ein Keramikrohr bei hohen Temperaturen während technisch interessanter Zeiten benützen zu können, sind einige Gesichtspunkte zu beachten.
Beim Erhitzen auf etwa 1250 °C treten zunächst erhebliche Längenzunahmen auf. Bei 2000 mm langen Rohren aus Sintertonerde liegen sie bei etwa 15 mm. Dies bedeutet, dass die Rohre - wie man sie auch anordnet - nur an einem Ende festgelegt werden können, während das andere Ende frei verschiebbar bleiben muss. Ferner werden die Rohre bei Temperaturen oberhalb 800 bis 900 °C bereits plastisch, d.h. sie verformen sich unter der Wirkung angreifender Kräfte bleibend. Hieraus folgt, dass man die Rohre zweckmässig an einem Ende aufhängt und frei hängen lässt. Der Anschluss des unteren Rohrendes hat über eine weiche, flexible Verbindung zu erfolgen, die den Bewegungen des Rohres keinen nennenswerten Widerstand entgegensetzt. Am unteren Ende des Rohres tritt das Gasgemisch aus Ammoniak und Kohlenwasserstoff mit Zimmertemperatur ein.

Nachdem die Gase sich im Rohr auf die Reaktionstemperatur erwärmt und am Katalysator umgesetzt haben, ist von der Thermodynamik her zu fordern, dass sie den mit Katalysator belegten Reaktionsraum möglichst mit Reaktionstemperatur verlassen und in einem katalysatorfreien Kühler sehr rasch auf Temperaturen unterhalb von 300 °C abgekühlt werden. Nur so ist ein Rückläufigwerden der Reaktion zu vermeiden. Diese Forderungen rein vom Chemismus des Prozesses her schliessen es ein, dass das Keramikrohr wirklich bis zu seinem Ende heiss gehalten werden muss. Die Aufgabe wurde so gelöst, dass das Rohr in einer kurzen Wärmeisolation aus Asbest oder ähnlichem Material in einer Stopfbuchse befestigt und auf diese Stopfbuchse der nachfolgende Kühler unmittelbar aufgesetzt wird. So wird man gleichzeitig den Forderungen nach einem ausgeprägten Temperatursprung und denjenigen der Keramik nach einem heissen Rohrende in vollem Umfange gerecht, s. F. ENDTER, Dechema Monographie, 1959, Heft 33, Seite 28 - 46.

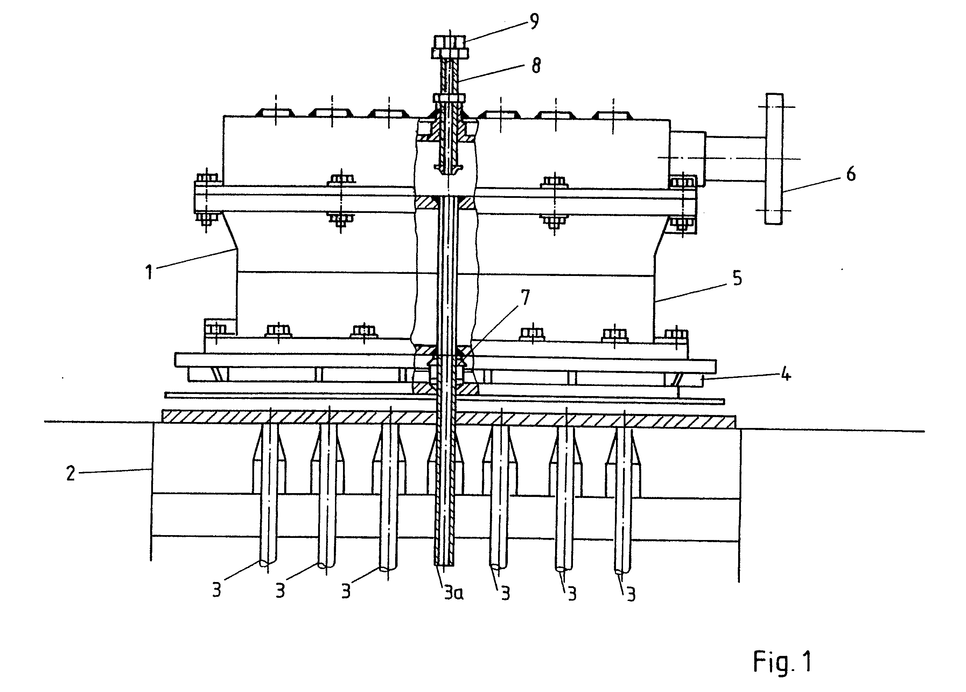

Die vorstehend angeführten Überlegungen führten zur Konstruktion eines Ofenkopfes gemäss Abbildung 1. Danach wurden im Ofenraum 2 die Rohre 3 frei hängend angebracht, über ihnen befand sich der Ofenkopf 1 mit dem Unterteil 4 und dem Mittelteil 5. Die gekühlten Gase wurden im Gassammelraum 6 aufgefangen. Eines der Rohre wurde in Längsschnitt dargestellt - Ziffer 3a - um seine Befestigung in der Rohrkopfhalterung 7 zeigen zu können. Die Rohre konnten jeweils durch eine hohle Spindel, die als Ziffer 8 für das Rohr 3a angegeben ist, gegen den Gassammelraum abgeschlossen werden. Letzteres ist absolut wichtig, wenn z.B. ein Rohr nicht mehr dicht ist, damit nicht eingedrungene Brenngase auf diese Weise in den Gassammelraum gelangen und das Produkt verschlechtern. Ferner war durch die Überwurfmuffe 9 die Möglichkeit gegeben, nach ihrem Abzug das Rohr reinigen zu können.

Es gelang zunächst, einen Ofenkopf für dreizehn Rohre zu konstruieren. Die Rohre wurden durch Kühlschlangen, in denen Kühlwasser floß, gekühlt.
In der Folgezeit war man bemüht, die Anzahl der Rohre unter Beibehaltung der alten Ofenkammer-Konstruktion möglichst zu vergrößern. Dabei war man aber an die Leistungskriterien des Ofenkopfes gebunden. Hierzu gehörten das thermodynamisch günstige Temperaturprofil, die exakte Halterung des Einzelrohres, die gute Zugänglichkeit der Rohre, z.B. bei Verrußung, sowie das einfache und sichere Verschließen des Einzelrohres gegen den Gassammelraum. Eine entsprechende Konstruktion wird in der DE-PS 1 041 476 beschrieben, die auch in Figur 1, unter Ziffer 12 und 13, die Draufsicht auf je einen, eine Ofenkammer abschliessenden Ofenkopf mit je dreizehn Rohren enthält.

Dieser Durchsatz hatte schliesslich durch Steigerung der Anzahl der Rohre pro Ofenkammereinheit auf sechsundzwanzig Rohre die geometrische Grenze der Rohranordnung im Ofenkopf, an dessen Leistungskriterien man ja gebunden war und der sich selbst daher nicht beliebig verändern liess, erreicht. Anderenfalls hätte man bei Vergrößerung der äußeren Ofenkopfgeometrie bzw. der Ofenkammern den kompletten Ofen neu konstruieren und damit erhebliche neue Investitionen in Kauf nehmen müssen.

Bisher war es nicht möglich, die sechsundzwanzig Rohre zu vermehren. Bei dem Versuch einer Erhöhung der Rohrzahl über diese Ziffer hinaus hätte der vorhandene Platz nicht mehr ausgereicht. Man begnügte sich also mit dem so erhaltenen Durchsatz, der auch für das gegebene Temperaturprofil das Optimum zu sein schien.

Das in Frage stehende Temperaturprofil ist gekennzeichnet durch einen raschen Temperaturanstieg nach Eintritt des Gemisches der Reaktionskomponenten in das Reaktionsrohr auf 1200 bis 1300 °C und eine Konstanz der erreichten Temperatur über die gesamte Länge des Reaktionsrohres hinweg bis zum Eintritt des Gasgemisches in den Kühlkopf. Hier erfolgt ein scharfer Knick auf Werte unter 300 °C. Zum Schutze des Keramikrohres wurde - wie oben ausgeführt - eine entsprechende Isolierung vorgenommen. Die Festlegung auf die genannten sechsundzwanzig Rohre war aber äußerst unbefriedigend.

Aufgabe der Erfindung ist es, den Durchsatz des Ausgangsgemisches und die Raum- Zeitausbeute in den vorhandenen Öfen zu erhöhen, ohne dass das gegebene Temperaturprofil innerhalb des Rohres und im Kühlkopf verändert wird, und dass ferner gleichzeitig Möglichkeiten bestehen, beschädigte oder verstopfte Rohre von dem Gassammelraum abzuschliessen bzw. leicht zu reinigen.

Es wurde nun gefunden, dass sich der Durchsatz eines Ofens bzw. einer Ofenkammer und somit die Raum - Zeitausbeute eines Ofens im BMA-Verfahren wesentlich steigern lassen unter Beibehaltung der bekannten Ofen- bzw. Ofenkammerkonstruktion und -dimension und des erforderlichen Temperaturprofils,wenn man durch Ausbildung des Unterteils des Kühlkopfes als kurzrohriger Bündelaustauscher bei im wesentlichen unveränderter äußerer Geometrie des Kühlkopfes und unter Beibehaltung des Ablaufs der Reaktions- und Kühltemperatur - entsprechend dem Temperaturprofil - durch Kombinieren der Zahl und Anordnung der Reaktionsrohre mit der Zahl und Anordnung der Heizelemente in der Ofenkammer, wobei man in flammenreichen Zonen bevorzugt eine weniger dichte Rohranordnung wählt und umgekehrt, die Anzahl der Reaktionsrohre vergrössert.

Eine bevorzugte Durchführungsform des erfindungsgemässen Verfahrens verwendet einen Ein- oder Mehrkammer-Rohrofen für die kontinuierliche Durchführung des Blausäure-Methan-Ammoniak-(BMA-)Verfahrens nach Anspruch 1 bei Temperaturen oberhalb 1000 °C in frei in der oder den Ofenkammer(n) aufgehängten keramischen Rohren, die mit einer gemeinsamen Gasversorgungs- und Gasabführungsvorrichtung verbunden sind, bei dem die Kammer(n) von einem oder mehreren Brennern beheizt werden und die Gasabführung in einem als Kühlorgan ausgestalteten Kühlkopf, in dem die keramischen Rohre gasdicht aufgehängt sind, vorgenommen wird, der dadurch gekennzeichnet ist, dass der an sich bekannte Kühlkopf in seinem Unterteil als kurzrohriger, von einer Kühlflüssigkeit durchströmter Bündelaustauscher ausgebildet ist, dessen Höhe dem zylindrischen Teil der Stopfbuchsen, in die die Keramikrohre unter Verwendung eines flexiblen, wärmefesten Materials eingebettet sind, entspricht, wobei diese Stopfbuchsen mit den Wärmeaustauschern einen solchen Kontakt haben, dass eine Temperaturabsenkung innerhalb des durchströmenden Produktgases von 200 - 300 °C im unteren Teil des Kühlkopfes erreicht wird, und dass in den durch die Beheizung der Ofenkammer entstehenden wärmeren und kälteren Zonen das zur Beibehaltung des bisher üblichen Durchsatzes der Reaktionsgase für jedes einzelne keramische Rohr notwendige Temperaturprofil durch dichtere oder weniger dichtere Anordnung der keramischen Rohre in der Ofenkammer und/oder durch keramische Rohre mit verschiedener innerer und/äußerer Geometrie und/oder Struktur aufrecht erhalten wird.

Die Wärmeabfuhr im Ofenkopf, d.h. im Unterteil wie im Mittelteil, erfolgt mit üblichen technischen Kühlmedien, wie z.B. mit Wasser oder Salzlösungen.

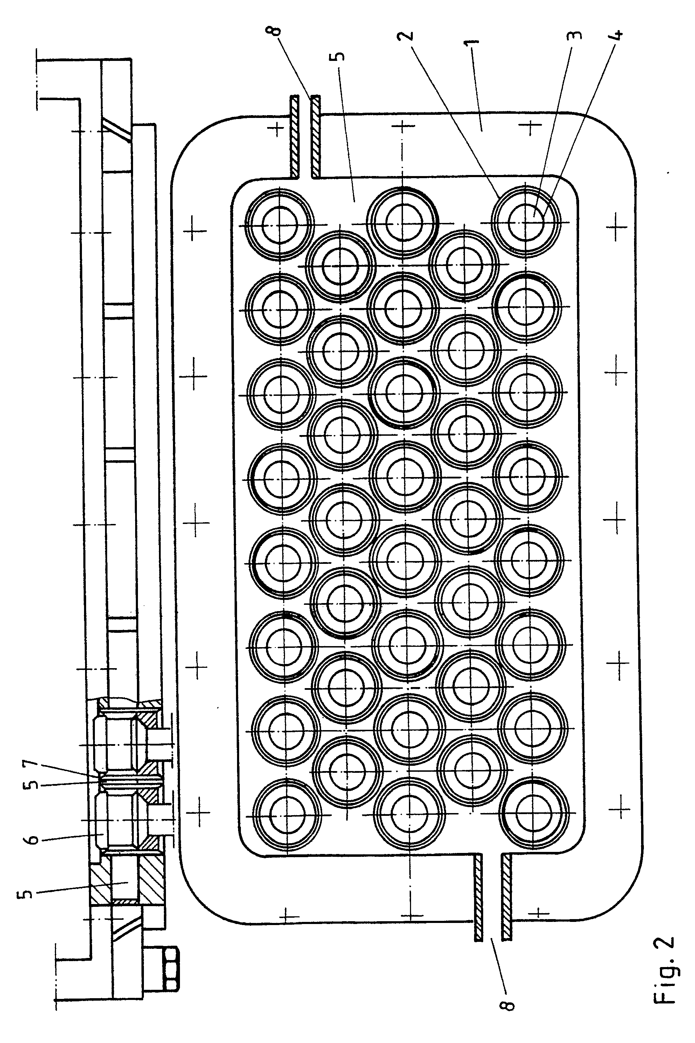

Die neue Bauweise des Ofenkopf-Unterteils wird in Abbildung 2 in Drauf- und Seitenansicht dargestellt:
Ziffer 1 bedeutet das Unterteil des Ofenkopfes, Ziffer 2 das Austauschrohr des kurzrohrigen Wärmeaustauschers, Ziffer 3 das Reaktionsrohr, Ziffer 4 die Stopfbuchse. Das Kühlmedium wird mit Ziffer 5 bezeichnet.

Die Seitenansicht im oberen Teil der Abbildung 2 zeigt das Ofenkopf-Unterteil mit den Stopfbuchsen 6 und ihrer Einpassung in die jeweiligen Austauschrohre 7. Das Kühlmedium befindet sich bei Ziffer 5. Die Zuführung bzw. der Abfluss des Kühlmediums erfolgt seitlich, beispielsweise bei 8.

Wie ersichtlich, lassen sich achtunddreissig Reaktionsrohre mühelos in dem erfindungsgemäss zu verwendenden Ofenkopf-Unterteil unterbringen, siehe Abbildung 2. Damit ist die quasi als natürliche Grenze angesehene Zahl von bisher sechsundzwanzig Rohren schon erheblich überschritten.

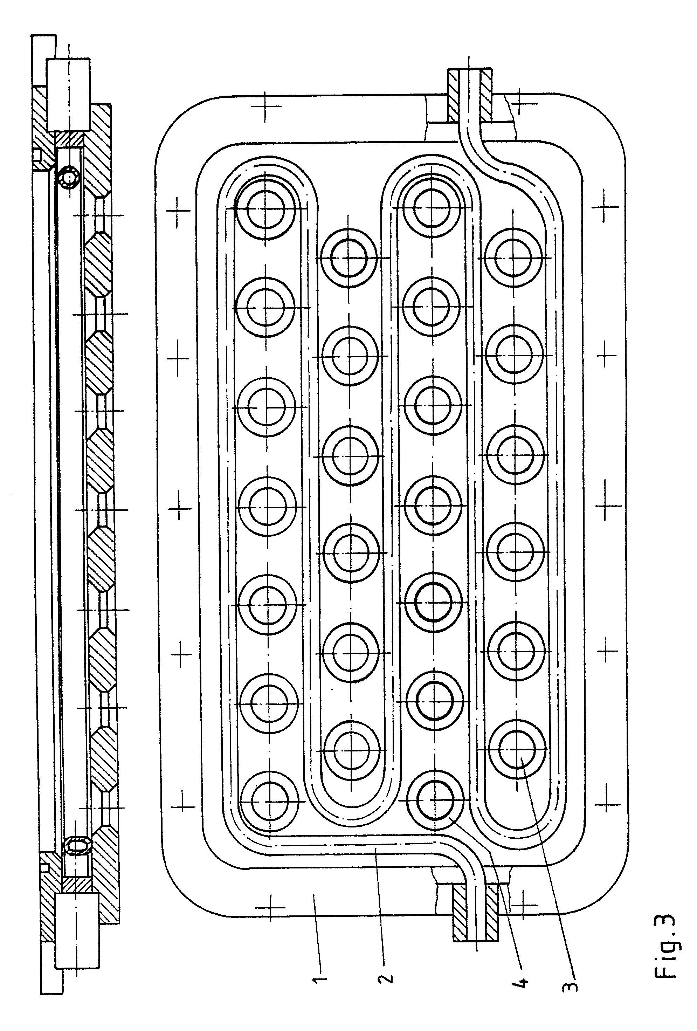

Die bisherige Anordnung der Reaktionsrohre mit einem als Schlangenkühler ausgebildeten Unterteil wird in Abbildung3 dargestellt. Die Ziffern 1, 3 und 4 bedeuten auch hier wie in Abbildung 2 das Unterteil des Ofenkopfes, das Reaktionsrohr und die Stopfbuchse. Ziffer 2 bezeichnet die Kühlschlange, die bei dieser alten Anordnung die Aufgabe übernimmt, die Stopfbuchsen mit den darin gehaltenen Reaktionsrohren im Unterteil zu kühlen.

Wie man aus der Abbildung 3 leicht erkennen kann, füllen die Stopfbuchsen mit den Reaktionsrohren und der Schlangenkühler den zur Verfügung stehenden Raum im Unterteil des Ofenkopfes vollkommen aus.

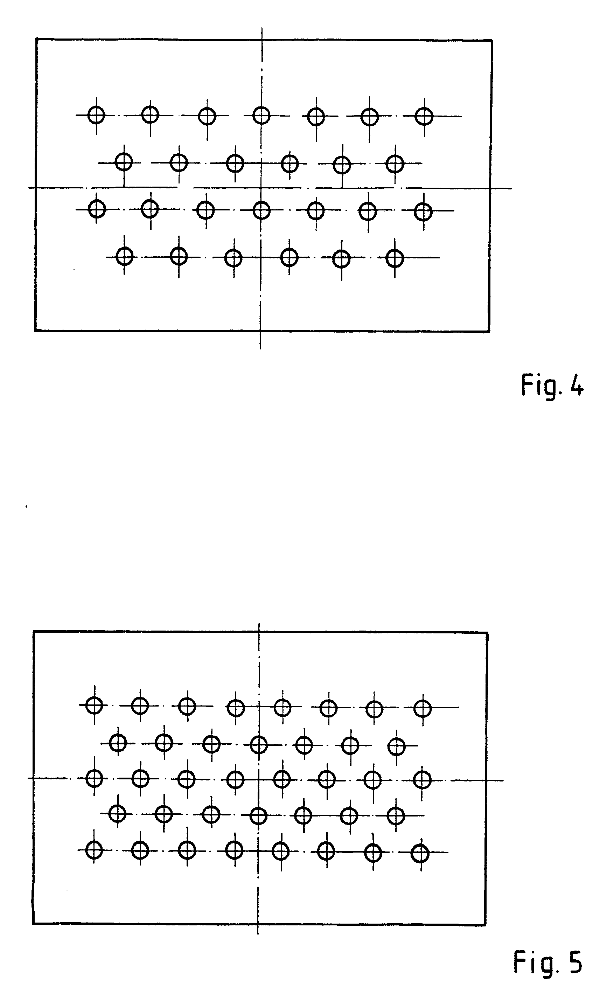

Wie schon ausgeführt, war nach der bisherigen Ausgestaltung des Ofenkopf-Unterteils die Zahl der maximal unterzubringenden Reaktionsrohre auf sechsundzwanzig Rohre je Reaktoreinheit (Ofenkammer) begrenzt. Diese Rohre waren in der Kammer - gemäss Abbildung 4 - frei aufgehängt.

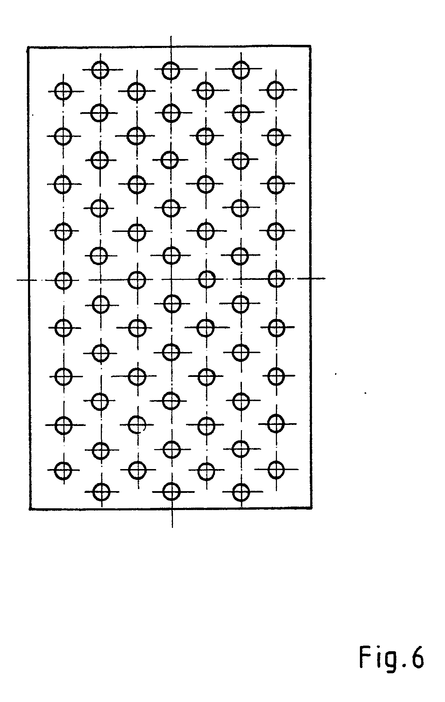

Abbildung 5 zeigt die Rohranordnung, die sich durch die neue Konstruktion des Unterteils - gemäss Abbildung 2 - ergibt, für achtunddreissig Rohre je Reaktoreinheit, und Abbildung 6 die sich nun ergebende geometrische Maximalzahl von sechsundsechzig Rohren.

Diese entscheidende, nicht vorhersehbare Steigerung der Zahl der Reaktionsrohre pro Reaktoreinheit führt aber nur dann zu einer entsprechenden Steigerung des Gesamtdurchsatzes pro Reaktoreinheit, wenn es gelingt, den Durchsatz pro Einzelrohr beizubehalten. Dazu ist es notwendig, dass jedes Einzelrohr in einer möglichst breiten Zone auf die für die endotherme Reaktion notwendige Temperatur von mehr als 1000 °C gebracht wird. Es nützt nämlich nichts, wenn durch die erhöhte Anzahl von Rohren für ungünstig positionierteeinzelne Reaktionsrohre ein Temperaturprofil vorliegt, bei dem die sog. BMA-Kriterien, d.h. möglichst kurze Aufheizzone für das eingebrachte Gasgemisch auf etwa 1000 °C und rasches Abkühlen nach der Umsetzung im oberen Abschnitt des Reaktionsrohres bzw. des Ofenkopfes auf unter 300 °C, nicht erfüllt sind. Deshalb ist es notwendig, die Zahl und Position der Brenner so auf die Anordnung der Reaktionsrohre abzustimmen, dass eine gleichmässige Temperaturverteilung gewährleistet ist.

Die gleiche Forderung gilt auch für die erfindungsgemäss zu verwendenden Rohre unterschiedlicher Geometrie und unterschiedlicher Innenstrukturierung.

Aus diesen Forderungen ergeben sich entweder symmetrische oder unsymmetrische Anordnungen, die mehr oder weniger stark "gelockert" sein können, und die beispielhaft in den nachfolgenden Anordnungsmustern beschrieben werden.

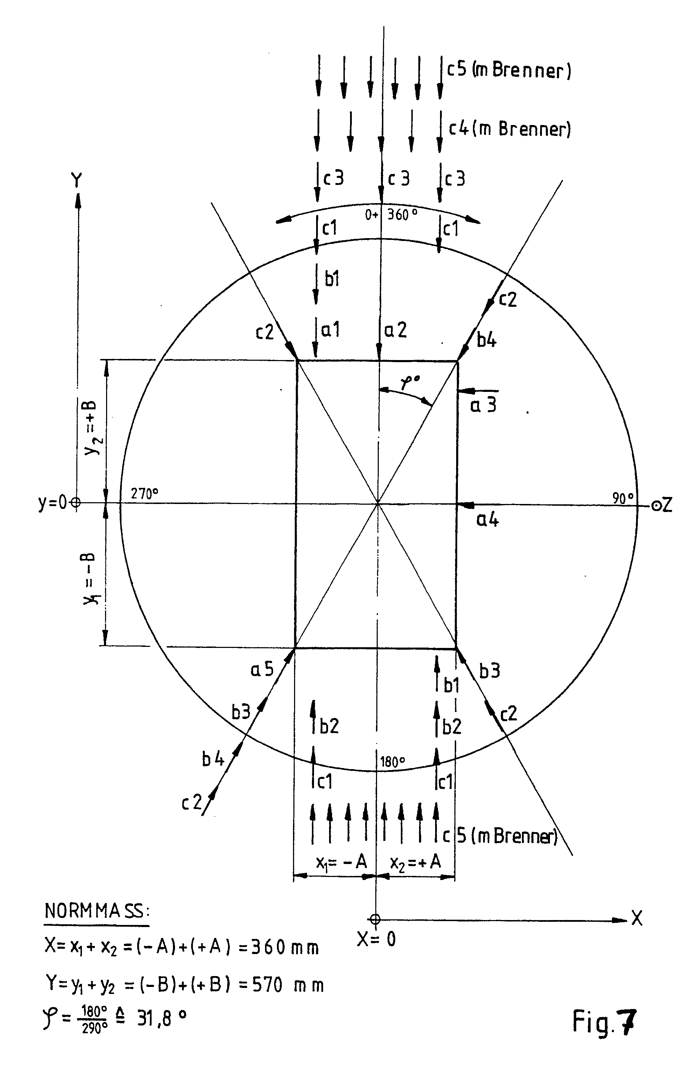

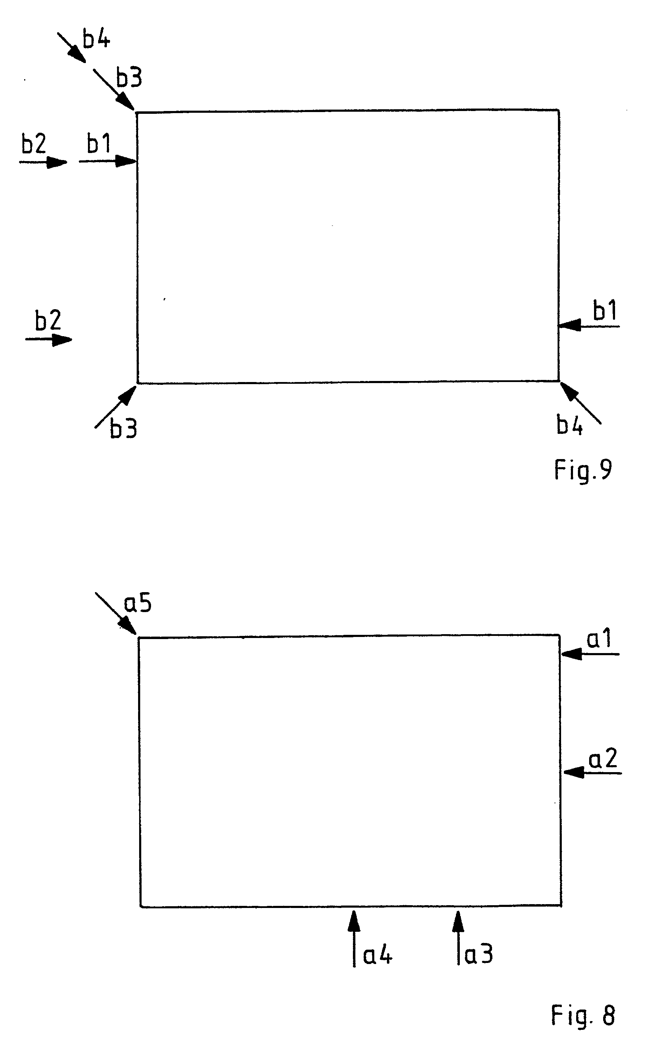

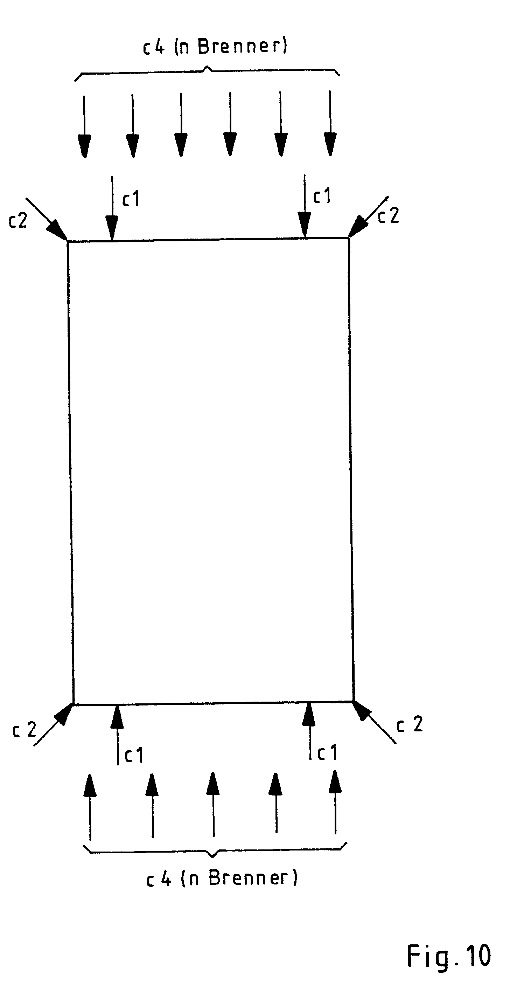

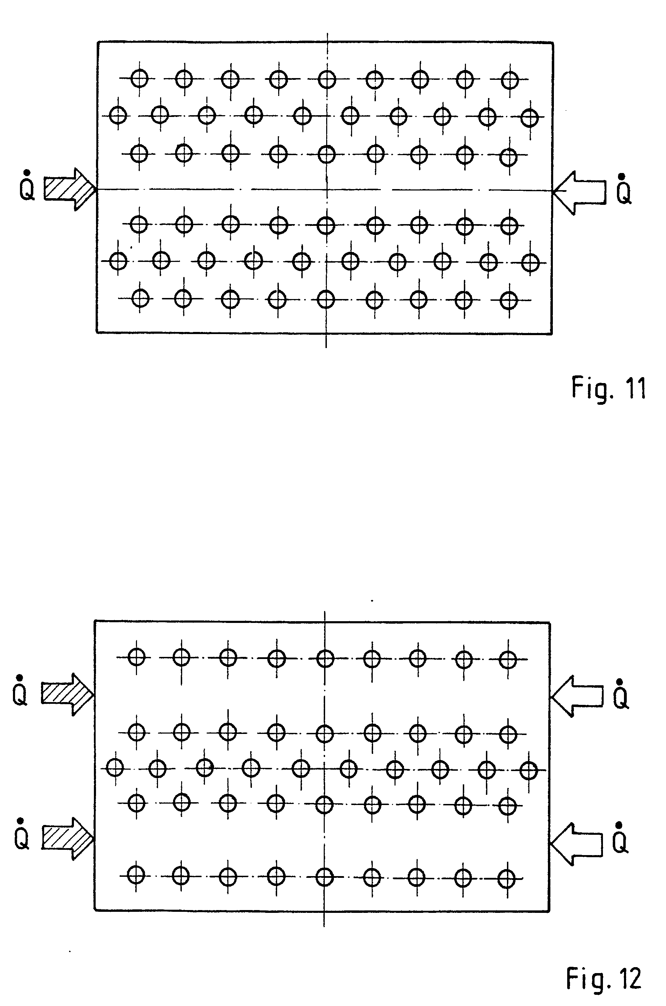

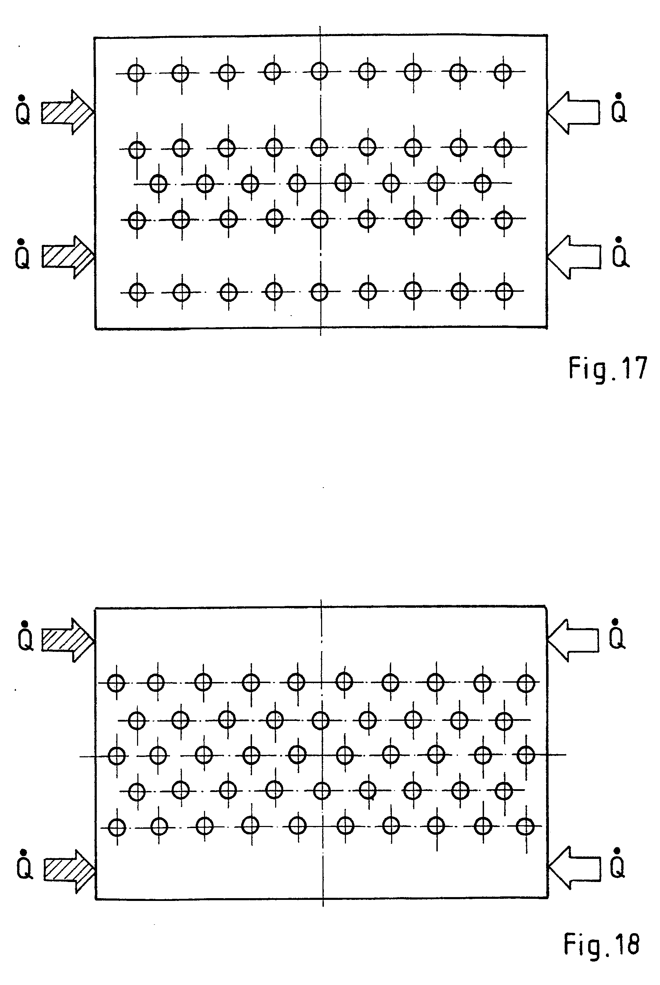

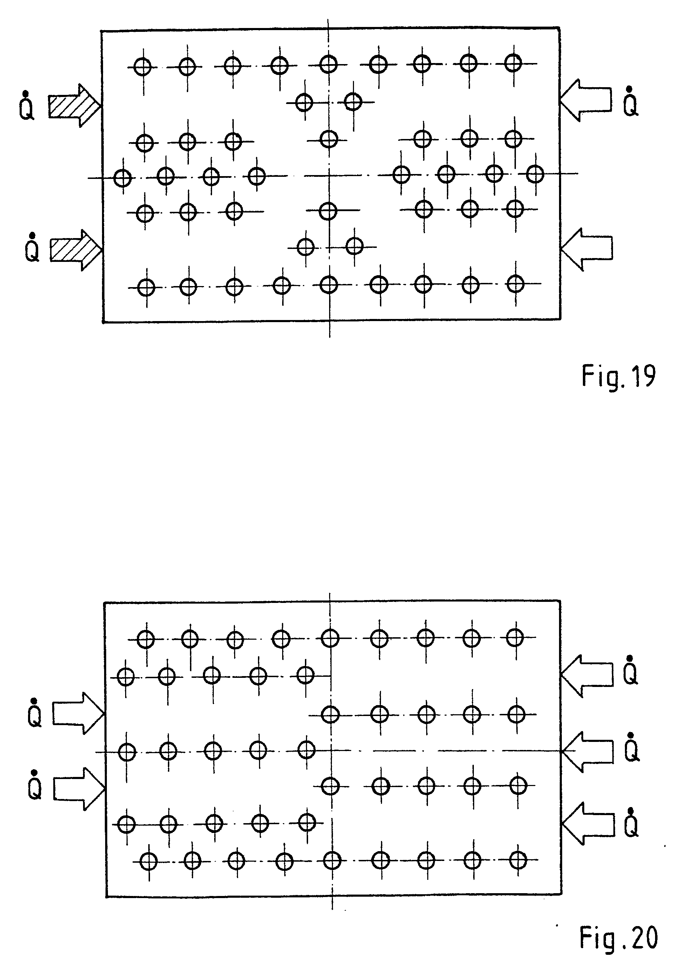

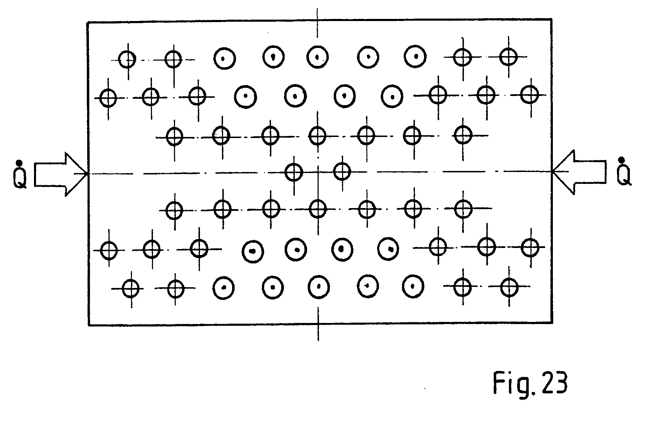

Abbildung 7 zeigt eine Ofenkammer A und die jeweils möglichen Positionen für den oder die Brenner. Dabei sind nur die X- und Y-Koordinaten festgelegt; bei einer Mehrbrenneranordnung können diese in unterschiedlicher Höhe angebracht sein. Dabei bedeuten in Abbildung 7, aber auch in den folgenden Abbildungen 8 - 10, die Ziffer "a" einen Einbrennerbetrieb, Ziffer "b" einen Zweibrennerbetrieb, Ziffer "c" einen Mehrbrennerbetrieb (n). Abgestimmt auf diese Brenner kann die Rohrpositionierung entweder den bereits beschriebenen Anordnungen in den Abbildungen 5 und 6 entsprechen. Bevorzugt sind aber Anordnungen, wie sie aus den Abbildungen 11 - 23 hervorgehen. So zeigt Abbildung 11 die Anordnung des Brenners bei einer - gegenüber dem alten Anordnungssystem - wesentlich höheren Rohrzahl, nämlich von sechsundfünfzig Rohren, und zwar für einen Einbrennerbetrieb bzw. Zweibrennerbetrieb.

Ein einziger Brenner Q kann - siehe Abbildung 11 - sowohl auf der linken wie rechten Schmalseite der Ofenkammer angeordnet sein. Die Position auf der linken Seite der Abbildung wird durch einen gestrichelten Pfeil, die auf der rechten Seite durch einen leeren Pfeil dargestellt.

Sind zwei Brenner Q vorhanden, so stehen sich die beiden Brenner auf den gegenüberliegenden Schmalseiten der Ofenkammer gegenüber.

Durch den in Abbildung 11 künstlich herbeigeführten Kanal zwischen den beiden Rohrgruppen verteilt sich die von dem einzigen Brenner bzw. von den beiden Brennern eingeführte Wärme gleichmässiger auf die gesamte Ofenkammer. Bei dem im BMA-Verfahren vorherrschenden Temperaturbereich überwiegt die Strahlungswärme.

Wäre der freigelassene Kanal dagegen mit Rohren besetzt, so würde ein Großteil der Wärme durch die Rohre abgeschirmt. Hierdurch würden zwangsläufig deutlich tiefere Temperaturen, z.B. bei den mittelständigen Rohren, auftreten.

Die gleichen Überlegungen führen zu den Rohranordnungen in den Abbildungen 12 - 20, bei denen die Rohre sämtlich gleiche Geometrie und gleiche strukturierte Innenfläche besitzen.

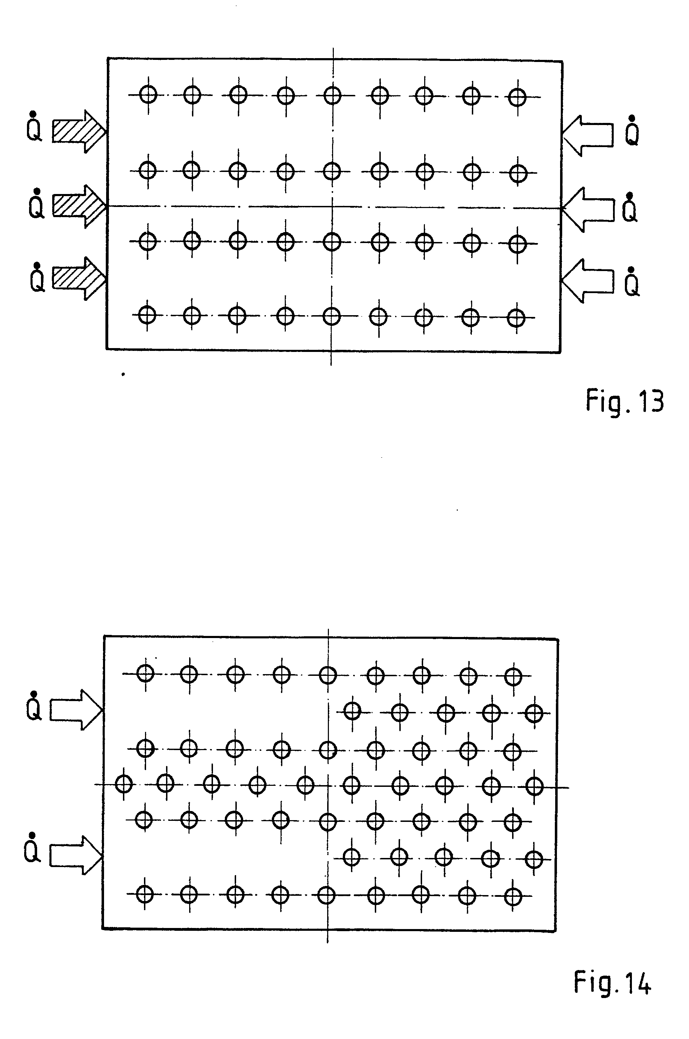

Wie ersichtlich, liegen bei diesen Anordnungen unterschiedliche Rohr- und Brennerzahlen vor. So gilt z.B. die Abbildung 12 für einen Zwei- bzw. Vierbrennerbetrieb mit sechsundvierzig Rohren, Abbildung 13 für einen solchen mit drei bzw. sechs Brennern, usw. .

Will man vermeiden, dass Rohre, die ungünstig positioniert sind, nur mit geringerer Gasmenge beaufschlagt werden können, ist es möglich, wie oben schon erwähnt wurde, nicht nur Rohre gleicher Geometrie und Innenstrukturierung zu verwenden, sondern auch solche, deren Geometrie und Innenflächenstruktur verschieden sind. Bei der verschiedenen Geometrie handelt es sich um Rohre mit verschiedenen Durchmessern; bei der verschiedenen Innenstruktur kommen beispielsweise, und zum Unterschied zu Normalrohren mit glatten Innenwänden solche Rohre in Frage, die bei oder nach ihrer Herstellung künstlich aufgerauht, oder mit glatten oder gedrillten Innenrippen über einen Teil des Rohres oder dessen gesamte Länge versehen wurden. Zusätzlichbesteht die Möglichkeit, Rohre gleicher Bauart, jedoch mit unterschiedlichen Kontaktmengen pro Einzelrohr in die Ofenkammer einzubauen, und damit, z.B. in kühleren Zonen, ein erhöhtes Katalysatorangebot zu haben.

Diese verschiedenartigen Rohre geben neben den künstlich geschaffenen Kanälen die Möglichkeit, durch eine gemischte Anordnung der verschiedenen Rohre die Aufgabe, den Durchsatz pro Ofenkammer zu erhöhen, zu lösen. Werden in den zwangsläufig kälteren Bereichen der Rohranordnungen, in denen die Reaktionsrohre nicht ganz die notwendige Betriebstemperatur erreichen, Rohre mit grösserem Innendurchmesser oder mit abweichender Innenstruktur, z.B. durch eine grössere innere Katalysatoroberfläche, oder durch beides, d.h. grösseren Innendurchmesser und grösserer Katalysatoroberfläche, angeordnet, so erreicht der Umsatz trotzdem auch in diesen einzelnen Reaktionsrohren den üblichen Wert. Bei Vergrösserung des Innendurchmessers wird die Verweilzeit der Reaktionsgase im Rohr erhöht; bei vergrösserter Katalysatoroberfläche oder -menge ist eine gesteigerte Umsatzzahl zu erwarten.

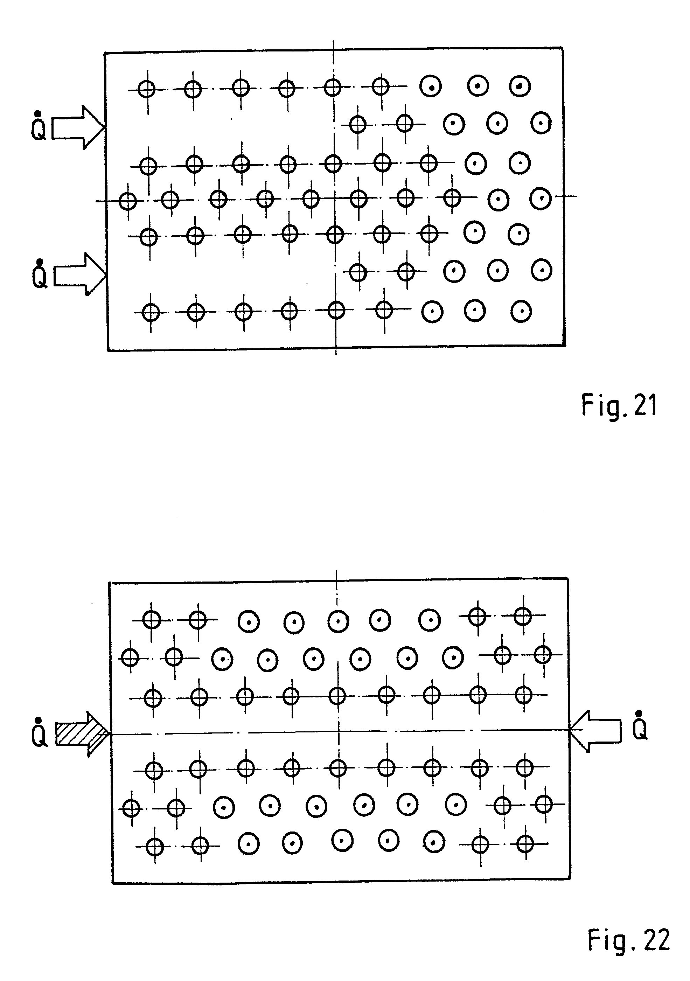

Anordnungen für derartige Reaktionsrohre für z.B. den Ein- oder Zweibrennerbetrieb geben die Abbildungen 21 - 23 wieder. Die bisher verwendeten Rohre sind innen gekreuzt, während die davon unterschiedlichen Rohre, die einen größeren Innendurchmesser und/oder eine andere Innenstruktur besitzen, mit Punkt dargestellt sind.
Solche innenmodifizierten Rohre sind über den freien Handel erhältlich und können nach speziellen Methoden, z.B. nach DE-PS 30 34 957, mit Katalysator belegt werden. Sie lassen sich - wenn sie einen grösseren Innendurchmesser besitzen - ohne weiteres in dem erfindungsgemäss zu verwendenden neuen Unterteil des Ofenkopfes durch entsprechende Dimensionierung der Stopfbuchsen anbringen.

Der technische Fortschritt des erfindungsgemässen Verfahrens und der erfindungsgemäss einzusetzenden Vorrichtungen, nämlich des neu gestalteten unteren Kühlteils des Ofenkopfes bzw. der neuartigen Anordnungsmuster von Rohren gleicher oder verschiedener Bauart unter Wahrung des bekannten, vorteilhaften Temperaturprofils des BMA-Verfahrens durch eine optimale Anordnung der Brenner in einer Ofenkammer bzw. von beiden, liegt in der nicht mehr zu erwartenden drastischen Steigerung der Raum- Zeitausbeute für eine Ofenkammer (Reaktorofeneinheit).

Die Erfindung wird anhand der nachfolgenden Beispiele noch weiter erläutert:

Beispiel 1

In einer BMA-Ofenkammer, bestückt mit sechsundzwanzig Kontaktrohren, die innen mit einem Platin-Katalysator belegt sind und deren Anordnung in der Kammer der Abbildung 4 entspricht, werden Methan und Ammoniak in einem Verhältnis von 1 : 1,05 bei Temperaturen von 1350 °C an den Kontakten zu Blausäure umgesetzt. Der für die Beheizung der Ofenkammer eingesetzte Brenner befindet sich in Position $a_1$ gem. Abbildung 8. Die HCN-Ausbeute beträgt 79 %, bezogen auf eingesetztes Ammoniak.

Beispiel 2

Wie in Beispiel 1 beschrieben, nur mit dem Unterschied, dass mit einer Zweibrenneranordnung gearbeitet wird, bei der die beiden Brenner gemäss Abbildung 9 in den Positionen $b_1$ stehen. Die Ausbeute beträgt bei gleichem Einzelrohrdurchsatz wie in Beispiel 1 82,4 %, bezogen auf eingesetztes Ammoniak.

Beispiel 3

Unter Bedingungen wie in Beispiel 2 (Zweibrennerbetrieb), jedoch mit Kontaktrohren, deren innerer Durchmesser ca. 10 % grösser ist, werden unter sonst gleichen Synthesebedingungen und Durchsätzen Ausbeuten von 83 %, bezogen auf eingesetztes $NH_3$, erreicht.

Beispiel 4

In einer Ofenkammer gleicher Geometrie werden nach dem erfindungsgemässen Verfahren achtunddreissig Rohre gemäss Abbildung 5 installiert. Die Kammer wird mit einem Brenner beheizt, der sich in Position $a_1$ (Abbildung 8) befindet. Die Ausbeute, gemittelt über alle achtunddreißig Rohre, beträgt 50 %.

Beispiel 5

Beispiel 4 wird wiederholt, jedoch mit zwei Brennern gemäß Abbildung 9 in den Positionen $b_1$. Die Ausbeute beträgt bei gleichen Einzelrohrdurchsätzen, ebenfalls gemittelt über alle achtunddreissig Rohre, 82 %.

Beispiel 6

Beispiel 4 wird wiederholt, jedoch mit insgesamt sechsundsechzig Rohren, wie in Abbildung 6 dargestellt. Die Brenneranordnung entspricht dem Beispiel 5.

Bei einem unveränderten Durchsatz pro Einzelrohr beträgt die Ausbeute, gemittelt über alle Rohre, 45 %.

Beispiel 7

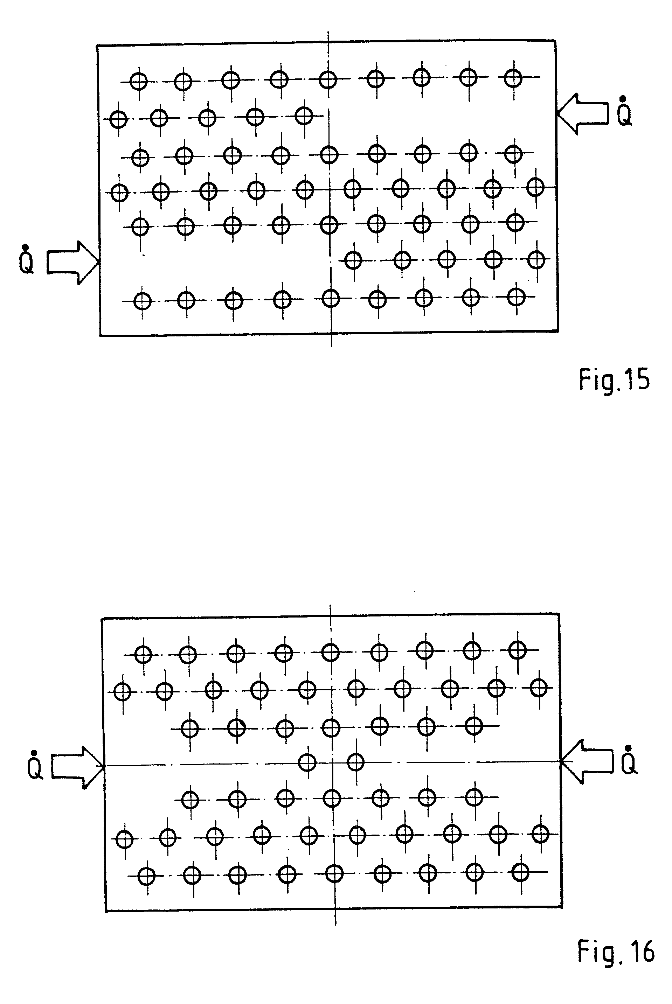

Beispiel 6 wird wiederholt, jedoch mit einer auf sechsundfünfzig Stück verminderten Rohrzahl in einem Anordnungsmuster gemäss Abbildung 15. Die Ausbeute beträgt 78 %.

Beispiel 8

Beispiel 7 wird wiederholt, jedoch werden die vier mittleren Rohre (vgl. Abbildung 15) durch solche ausgetauscht, die auf Grund ihrer Innenstrukturierung eine um ca. 20 % vergrösserte Katalysatoroberfläche besitzen. Die Ausbeute, gemittelt über alle Rohre, beträgt 79,5 %.

## Ansprüche

1. Verfahren zur Steigerung des Durchsatzes eines Ofens bzw. einer Ofenkammer und damit der Raum- Zeitausbeute eines Ofens im sog. BMA-Verfahren unter Beibehaltung der bekannten Ofen- bzw. Ofenkammerkonstruktion und -dimension und des erforderlichen Temperaturprofils, dadurch gekennzeichnet, dass man durch Ausbildung des Unterteils des Kühlkopfes als kurzrohriger Bündelaustauscher bei im wesentlichen unveränderter äußerer Geometrie des Kühlkopfes und unter Beibehaltung des Ablaufs der Reaktions- und Kühltemperatur - entsprechend dem Temperaturprofil - durch Kombinieren der Zahl und Anordnung der Reaktionsrohre mit der Zahl und Anordnung der Heizelemente in der Ofenkammer, wobei man in flammenreichen Zonen bevorzugt eine weniger dichte Rohranordnung wählt und umgekehrt, die Anzahl der Reaktionsrohre vergrössert.

2. Ein- oder Mehrkammer-Rohrofen für die kontinuierliche Durchführung des Blausäure-Methan-Ammoniak-(BMA-)Verfahrens nach Anspruch 1 bei Temperaturen oberhalb 1000 ° C in frei in der oder den Ofenkammer(n) aufgehängten keramischen Rohren, die mit einer gemeinsamen Gasversorgungs- und Gasabführungsvorrichtung verbunden sind, bei dem die Kammer(n) von einem oder mehreren Brennern beheizt werden und die Gasabführung in einem als Kühlorgan ausgestalteten Kühlkopf, in dem die keramischen Rohre gasdicht aufgehängt sind, vorgenommen wird, dadurch gekennzeichnet, dass der Kühlkopf in seinem Unterteil als kurzrohriger, von einer Kühlflüssigkeit durchströmter Bündelaustauscher ausgebildet ist, dessen Höhe dem zylindrischen Teil der Stopfbuchsen, in die die Keramikrohre unter Verwendung eines flexiblen, wärmefesten Materials eingebettet sind, entspricht, wobei diese Stopfbuchsen mit den Wärmeaustauschern einen solchen Kontakt haben, dass eine Temperaturabsenkung innerhalb des durchströmenden Produktgases von 200 - 300 ° C im unteren Teil des Kühlkopfes erreicht wird, und dass in den durch die Beheizung der Ofenkammer entstehenden wärmeren und kälteren Zonen das zur Beibehaltung des bisher üblichen Durchsatzes der Reaktionsgase für jedes einzelne keramische Rohr notwendige Temperaturprofil durch dichtere oder weniger dichtere Anordnung der keramischen Rohre in der Ofenkammer und/oder durch keramische Rohre mit verschiedener innerer und/äußerer Geometrie und/oder Struktur aufrecht erhalten wird.

## Claims

1. A process for increasing the flow rate through an oven or an oven chamber and hence the volume/time yield of an oven in the so-called BMA process while retaining the known construction and dimensions of ovens or oven chambers and the required temperature profile, characterised in that by constructing the lower part of the cooling head as an exchanger in the form of a nest of short pipes while the external geometry of the cooling head is substantially unchanged and the reaction temperature and cooling temperature graph is maintained according to the temperature profile by combining the number and arrangement of reaction pipes with the number and arrangement of heating elements in the oven chamber, the number of reaction pipes is increased, a less dense arrangement of pipes being preferably used in the flame rich zones and conversely.

2. Single chamber or multi-chamber tubular furnace for continuously carrying out the hydrocyanic acid/methane/ammonia/(BMA) process according to Claim 1 at temperatures above 1000 ° C in ceramic pipes suspended freely in the furnace chamber(s), which pipes are connected to a common gas supply and gas discharge device, in which the chamber(s) is or are heated by one or more burners and the removal of gas is carried out in a cooling head in the form of a cooling device in which the ceramic pipes are suspended gas-tightly, characterised in that the lower part of the cooling head is constructed as an exchanger in the form of a nest of short pipes through which a cooling fluid flows, the height of which exchanger corresponds to the cylindrical part of the packing glands in which the ceramic pipes are embedded by means of a flexible, heat-resistantmaterial, the said packing glands being in such contact with the heat exchangers that a drop in temperature of from 200 - 300°C is achieved in the stream of product gas in the lower part of the cooling head and in that in the hotter and cooler zones produced by heating the furnace chambers, the temperature profile required for maintaining the customary rate of throughput of reaction gas for each individual ceramic pipe is achieved by a denser or less dense arrangement of the ceramic pipes in the furnace chamber and/or by using ceramic pipes differing in their internal and/or external geometry and/or structure.

## Revendications

1. Procédé pour augmenter la conversion d'un four ou d'une chambre de four et ainsi le rendement espace/temps d'un four dans le procédé dénommé BMA tout en maintenant la construction et la dimension connues du four ou de la chambre de four ainsi que le profil de température nécessaire, caractérisé en ce que l'on augmente le nombre de tubes de réaction par formation de la partie inférieure de la tête de refroidissement sous forme d'échangeur en faisceau à tubes courts pour une géométrie extérieure inchangée essentiellement de la tête de refroidissement et en maintenant le déroulement de la température de réaction et de refroidissement, correspondant au profil de température, par combinaison du nombre et de la disposition des tubes de réaction avec le nombre et la disposition des éléments de chauffage dans la chambre de four, pour lequel on choisit de préférence, dans les zones riches en flammes une disposition des tubes moins dense et inversement qui augmente le nombre des tubes de réaction.

2. Four tubulaire à une ou plusieurs chambres pour l'exécution en continu du procédé acide cyanhydrique/méthane/ammoniac (BMA) selon la revendication 1 à des températures au-dessus de 1000° dans des tubes de céramique librement suspendus dans la ou les chambres de four, qui sont reliés à un dispositif commun d'alimentation et d'évacuation de gaz, dans lequel la (les) chambres(s) est chauffée avec un ou plusieurs brûleurs, et l'évacuation des gaz est effectuée dans une tête de refroidissement façonnée sous forme d'organe de refroidissement dans laquelle les tubes de céramique sont suspendus étanches aux gaz, caractérisé en ce que la tête de refroidissement à sa partie inférieure est façonnée sous forme d'un échangeur en faisceau à tubes courts, parcouru par un fluide de refroidissement, dont la hauteur correspond à la partie cylindrique des presseétoupe dans lesquels les tubes de céramique sont insérés par utilisation d'un matériau flexible, résistant à la chaleur, par lequel ces presse-étoupe ont avec les échangeurs de chaleur un contact tel qu'un abaissement de température à l'intérieur des gaz du produit qui parcourent les tubes de 200 à 300°C, est obtenu à la partie inférieure de la tête de refroidissement et que dans les zones plus chaudes et plus froides qui se produisent par le chauffage de la chambre de four, le profil de température nécessaire pour chaque tube individuel en céramique pour le maintien de la conversion des gaz de réaction jusqu'ici habituelle, est maintenu par une disposition plus dense ou moins dense des tubes de céramique dans la chambre de four et/ou par des tubes de céramique ayant une géométrie intérieure et extérieure, et/ou une structure différentes.

Fig. 1

EP 0 125 395 B1

Fig. 2

EP 0 125 395 B1

Fig.3

Fig. 4

Fig. 5

Fig.6

NORMMASS:

$X = x_1 + x_2 = (-A) + (+A) = 360\,mm$

$Y = y_1 + y_2 = (-B) + (+B) = 570\,mm$

$\varphi = \dfrac{180°}{290°} \triangleq 31,8°$

Fig. 7

Fig.9

Fig. 8

c4 (n Brenner)

$c1$       $c1$

$c2$         $c2$

$c2$         $c2$

$c1$       $c1$

c4 (n Brenner)

Fig.10

Fig. 11

Fig. 12

Fig. 13

Fig. 14

Fig. 15

Fig. 16

Fig.17

Fig.18

Fig.19

Fig.20

Fig. 21

Fig. 22

Fig. 23